# EUROPEAN PATENT SPECIFICATION

(11) **EP 0 363 081 B1**
(45) Date of publication and mention of the grant of the patent: **15.06.1994**
(21) Application number: 89309908.5
(22) Date of filing: 28.09.1989
(51) Int. Cl.: H04N 7/16, H04N 7/167

(54) **Impulse pay per view programming distribution control system**
Steuersystem zur Verteilung von Vorauszahlungsprogrammen
Système de commande pour la distribution de programmes à prépaiement

(30) Priority: 07.10.1988 US 255117
(43) Date of publication of application: 11.04.1990
(60) Divisional application: 93118075.6
(73) Proprietor: GENERAL INSTRUMENT CORPORATION OF DELAWARE, Hatboro, Pennsylvania 19040 (US)
(72) Inventor: Bennett, Christopher John, San Diego California 92116 (US)
(74) Representative: Blatchford, William Michael

(56) References cited:
- EP-A- 0 164 983
- EP-A- 0 180 460
- EP-A- 0 187 961
- WO-A-85/00718
- US-A- 4 475 123
- US-A- 4 751 732

## Description

The present invention generally pertains to the distribution of scrambled impulse pay per view (IPPV) programs and is particularly directed to controlling the distribution of IPPV programs from a plurality of different IPPV programmers to a plurality of descramblers that are authorized for descrambling the IPPV programs by respectively different business data processing systems.

A prior art IPPV distribution control system is described in US-A-4712238 and has an individual descrambler authorized to descramble an individual IPPV program upon processing cost data for the program and credit data for the descrambler and upon processing IPPV status data for the program and authorization data for the descrambler.

According to the present invention, there is provided a distribution control system for controlling the distribution of scrambled impulse pay per view (IPPV) programming from a plurality of different IPPV programmers to a plurality of descramblers that individually may be authorized to descramble an individual IPPV program upon processing of a cost data signal for the program and a credit data signal for the descrambler and that individually provide view history data signals, the distribution control system comprising a business data processing system adapted for processing view history data signals and credit data signals for individual descramblers and for providing credit data signals pertaining to individual descramblers; and a plurality of channel control systems respectively related to a plurality of the given IPPV programmers, wherein the channel control systems are adapted for providing descrambler messages containing cost data signals for individual IPPV programs; and an IPPV data management systems adapted for processing the credit data signals provided by the business data processing system to provide descrambler messages unique to each descrambler containing credit data signals pertaining to the individual descrambler, the system being characterised by there being a plurality of said business data processing systems; and by the channel control systems being adapted for providing identification signals for individual programs with the cost data signals provided for said programs; each business data processing system being adapted for processing the credit data signals with view history data signals identifying descrambled IPPV programs provided by the descramblers and identification and cost data signals for individual IPPV programs provided by the channel control systems to provide the credit data signals that are provided to the IPPV data management system; the IPPV data management system being adapted for sorting the IPPV program identification and cost data signals provided by the channel control systems in accordance with which business data processing systems process data signals for those IPPV programs provided by the respective given IPPV programmers, for sorting view history data signals identifying descrambled IPPV programs provided by the descramblers in accordance with which business data processing systems process data signals for the respective descramblers for the IPPV programmers that provide the IPPV programs identified in the view history data signals provided by the respective descramblers, and for forwarding the sorted IPPV program identification and cost data signals and the sorted view history data signals to the respective business data processing systems.

The system may be authorized to descramble a program conditional upon processing an IPPV status data signal for the program and an authorization data signal for the descrambler, each channel control system providing descrambler messages containing IPPV status signals for individual IPPV programs. The IPPV data management system may also process the IPPV authorization data signals provided by the business data processing system to provide the descrambler messages, these messages containing IPPV authorization data signals pertaining to the individual descrambler.

Each of the business data processing systems may be operated by a separate business entity that contracts with given IPPV programmers and owners of individual descramblers to authorize the individual descramblers to descramble the IPPV programming provided by the given IPPV programmers. The IPPV programming distribution control system of the present invention allows the view history data of a given descrambler pertaining to programs provided by one given IPPV programmer to be restricted from the business entities that do not operate the business data processor that provides authorization data pertaining to IPPV programming of the one given IPPV programmer for the individual descrambler. Accordingly, it is possible to provide centralized authorization of different individual descramblers for receiving IPPV programming provided by different IPPV programmers without making the view history data of an individual descrambler pertaining to a given IPPV programmer accessible to business entities that do not operate the business data processing system that authorizes the individual descrambler to descramble IPPV programming provided by the given IPPV programmer.

In one preferred embodiment of the present invention, the IPPV data management system sorts view history data in accordance with a scheme wherein the view history data from a given descrambler for a given IPPV programmer is reported to only one business data processing system.

In another preferred embodiment, a plurality of the said IPPV data management systems are coupled to the said plurality of business data processing systems and the said plurality of channel control systems; and all data pertaining to any given descrambler is processed by a single said IPPV data management system.

In still another preferred embodiment, in which the system is adapted for controlling the distribution of IPPV programming to descramblers that individually may be authorized to descramble a given IPPV program upon processing of cost data for the program and credit data for the descrambler only when said IPPV status data identifies the given IPPV program as being authorized for purchase and the authorization data for the descrambler indicates that purchase of IPPV programs provided by the programmer providing said given IPPV program is authorized, each of the individual descrambler messages provided by the IPPV data management system contains a plurality of tier authorization bits, with the position of each bit identifying a tier of IPPV programs and each bit indicating whether purchase by the individual descrambler is authorized for the tier of IPPV programs identified by such bit; and the descrambler messages provided by a plurality of the channel control systems for a respective plurality of different IPPV programmers each contains an IPPV status bit in a respectively different position for processing with the tier authorization bits of the individual descrambler message, with each IPPV status bit indicating whether or not purchase of IPPV programming provided by the respective IPPV programmer is authorized.

The invention will now be described by way of example with reference to the drawings, in which:-
Figure 1 is a block diagram of one preferred embodiment of the system of the present invention; and
Figure 2 is a block diagram of another preferred embodiment of the system of the present invention.

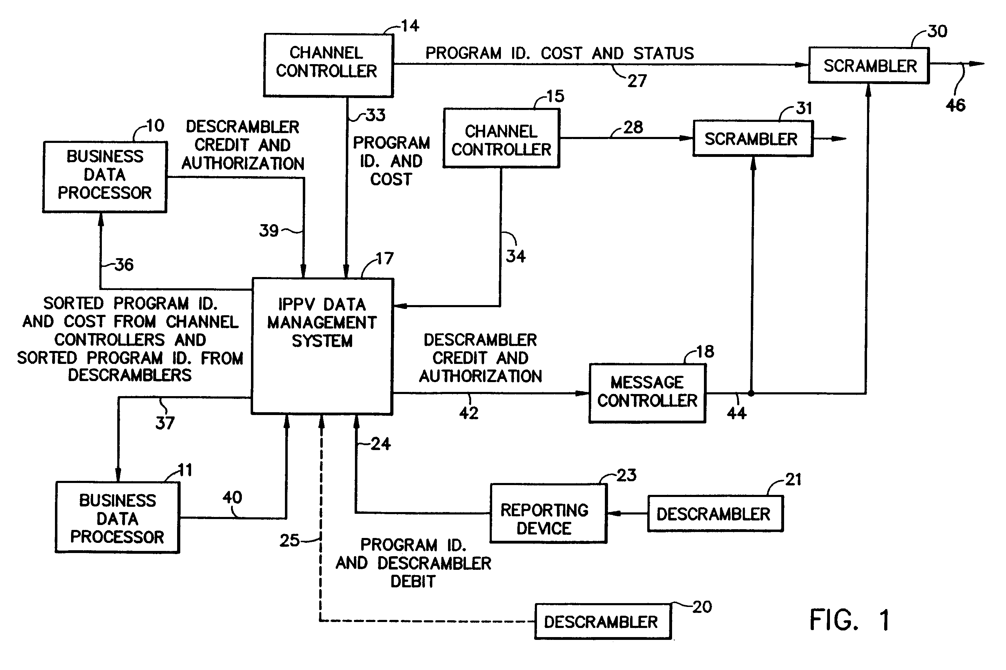

Referring to Figure 1, one preferred embodiment of the IPPV programming distribution control system of the present invention includes a plurality of business data processors 10, 11, a plurality of channel controllers 14, 15, an IPPV management system 17, and a message controller 18.

The distribution control system of Figure 1 controls the distribution of scrambled impulse pay per view (IPPV) programming from a plurality of different IPPV programmers to a plurality of descramblers 20, 21 that individually may be authorized to descramble an individual IPPV program upon processing of cost data for the program and credit data for the descrambler and upon processing of IPPV status data for the program and authorization data for the descrambler. The descramblers 20, 21 may be of the type described in the aforementioned U.S. Patent No. 4,712,238. However, an improved version that is adapted for processing a plurality of tiers of IPPV authorization data is preferred.

Each descrambler 20, 21 individually provides debit data indicating the cost of descrambled IPPV programs and view history data identifying descrambled IPPV programs. This descrambler-provided data is communicated to the IPPV data management system 17, either directly by a reporting device 23 connected to the descrambler 21 and line 24, or indirectly 25. Such indirect communication may be as described in U.S. Patent No. 4,712,238, or by use of a portable memory device into which the descrambler-provided data is stored from the descrambler 20 and from which the descrambler-provided data is retrieved and loaded into the IPPV data management system 17. The reporting device 23 may be of the type described in United States Patent Application No. 07/123,568 (= EP-A-0317082) filed November 20, 1987 by Christopher John Bennett, the inventor of the present invention. Alternatively the reporting device 23 may of the type that responds to a polling signal transmitted to the descrambler 21.

Each of the channel controllers 14, 15 is operated by a different IPPV programming provider. An IPPV programmer may offer material on more than one channel. Each of the channels controllers 14, 15 respectively provides descrambler messages containing identification, cost and IPPV status data for individual IPPV programs. These descrambler messages are authenticated and provided over lines 27, 28 to scramblers 30, 31 that are operated by the respective IPPV programming providers. The descrambler messages provided on lines 27 and 28 are first processed by the respective controllers 14, 15 to authenticate such messages for transmission to the descramblers 20, 21. Such authentication processing is described in U.S. Patent No. 4,712,238 in the description of the processing of the cost signal and the program mask for inclusion in a channel rekey message.

The channel controllers 14, 15 also provide such IPPV program and cost identification data to the IPPV data management system 17 via lines 33, 34.

The IPPV data management system 17 sorts the IPPV program identification and cost data provided by the channel controllers 14, 15 in accordance with which business data processors 10, 11 process data for those IPPV programs provided by the respective given IPPV programmers, and sorts view history data provided by the descramblers 20, 21 in accordance with which business data processors 10, 11 process data for the respective descramblers 20. 21 for the IPPV programmers that provide the IPPV programs identified in the view history data provided by the respective descramblers 20, 21. The IPPV data management system 17 sorts the view history data in accordance with a scheme wherein the view history data from a given descrambler 20, 21 for a given IPPV programmer is reported to only one business data processor 10, 11.

The IPPV data management system 17 forwards the sorted IPPV program identification and cost data and the sorted view history data to the respective business data processors via lines 36, 37.

Each business data processor 10, 11 processes view history data and credit data for individual descramblers 20, 21 and cost data for IPPV programs provided by given IPPV programmers and provides credit data and IPPV authorization data pertaining to individual descramblers 20, 21 via lines 39, 40 to the IPPV data management system 17.

Each of the business data processors 10, 11 is operated by a separate business entity that contracts with given IPPV programmers and owners of individual descramblers 20, 21 to authorize the individual descramblers to descramble the IPPV programming provided by the given IPPV programmers. Each of the business data processors 10, 11 maintains an account balance for each individual descrambler 20, 21 for which it authorizes descrambling of IPPV programming. Credits are added to the account balance for payments and for credit advances attributed to the owner of such individual descramblers 20, 21. Debits are subtracted from the account balance for charges incurred for descrambled IPPV programming. Such debits are computed by the business data processor 10, 11 by correlating the IPPV program identification data included in the view history data received from the individual descrambler 20, 21 via the IPPV data management system 17 with the cost data for the identified IPPV program, as provided to the business data processor 10, 11 via the IPPV data management system 17 from the channel controller 14, 15 for the identified IPPV program.

For example, the business data processor 10 authorizes the descrambler 20 to descramble IPPV programming provided by the IPPV programmer that operates the channel controller 14. The business data processor 10 receives view history data indicating that the descrambler 20 has descrambled IPPV program No. 101 provided by the IPPV programmer that operates the channel controller 14. The business data processor 10 also receives data from the channel controller 14 (via the IPPV data management system 17) indicating the cost of descrambling IPPV program No. 101. With such received data, the business data processor 10 debits the account balance of the owner of descrambler 20 by the cost of descrambling IPPV program No. 101. The account balances for the respective descramblers 20, 21 that are maintained by the business data processors 10, 11 are used for billing the owners of the descramblers 20, 21.

The IPPV data management system 17 processes the credit data and IPPV authorization data provided by the business data processors 10, 11 to provide descrambler messages on line 42 that are unique to each descrambler and contain credit data and IPPV authorization data pertaining to the individual descrambler 20, 21. The IPPV data management system 17 maintains an accumulated credit balance for each individual descrambler 20, 21. Credit data received from the business data processors 10, 11 indicating a payment attributed to the owner of an individual descrambler 20, 21 causes the accumulated credit balance to be incremented in the amount of such payment. The accumulated credit is further adjusted either upward or downward in accordance with advanced credit data received from all of the business data processors 10, 11. The IPPV data management system 17 makes such adjustment in accordance with a predetermined criteria. For example, the adjustment may be made by the amount of the sum of the credit advances indicated in the credit data received from the different business data processors 10, 11; or the adjustment may be made by the amount of the lowest credit advance indicated in the credit data received from the different business data processors 10, 11.

The IPPV data management system 17 authenticates the debit data provided by the descramblers 20, 21. When the debit data is provided indirectly 25, such authentication is accomplished in the manner described in U.S. Patent US-A-4,712,238. When the debit data is provided directly over line 24, such authentication is accomplished by comparing the debit data with debit data calculated by processing the descrambling program identification data in the view history with the cost data for the identified programs that is provided by the channel controllers 14, 15.

The system of the present invention is used to control the distribution of IPPV programming to descramblers 20, 21 that individually may be authorized to descramble a given IPPV program upon processing of cost data for the program and credit data for the descrambler 20, 21 only when the IPPV status data identifies the given IPPV program as being authorized for purchase and the authorization data for the descrambler indicates that purchase of IPPV programs provided by the programmer providing said given IPPV program is authorized. Each of the individual descrambler messages provided by the IPPV data management system 17 contain a plurality of tier authorization bits, with the position of each bit identifying a tier of IPPV programs and each bit indicating whether purchase by the individual descrambler 20, 21 is authorized for the tier of IPPV programs identified by such bit. In one such embodiment, the descrambler messages provided by a plurality of the channel controllers 14, 15 for a respective plurality of different IPPV programmers each contains an IPPV status bit in a respectively different position for processing with the tier authorization bits of the individual descrambler message, with each IPPV status bit indicating whether or not purchase of IPPV programming provided by the respective IPPV programmer is authorized. A business data processor 10, 11 can authorize an individual descrambler 20, 21 for any number of tiers; and a given descrambler can be authorized by any number of business data processors 10, 11 for a given tier if there is duplication of in IPPV programming packages sold by business entities operating different business data processors 10, 11.

In another embodiment, the descrambler messages provided by a group of the channel controllers 14, 15 contain an IPPV status bit in a position for processing with a common one of the tier authorization bits of the individual descrambler message, with the IPPV status bit indicating whether or not purchase of an IPPV program is authorized. This enables the IPPV programming distribution control system to accommodate a greater number of channel controllers 14, 15 than the number of tier authorization bit positions in the descrambler message provided by the IPPV data management system 17.

The descrambler messages provided on line 42 are processed by the message controller 18 to authenticate such messages for transmission to the descramblers 20, 21. Such authentication processing is described in U.S. Patent US-A-4,712,238 in the description of the processing of the credit signal and the authorization word for inclusion in a category rekey message. The authenticated descrambler messages are provided on line 44 to each of the scramblers 30, 31 for the different IPPV programmers. Each scrambler 30, 31 includes the authenticated descrambler messages received on lines 27, 28 from the channel controllers and on line 44 from the message controller 18 in scrambled programming signals 46 that are transmitted to the descramblers 20, 21, as described in U.S. Patent US-A-4,712,238.

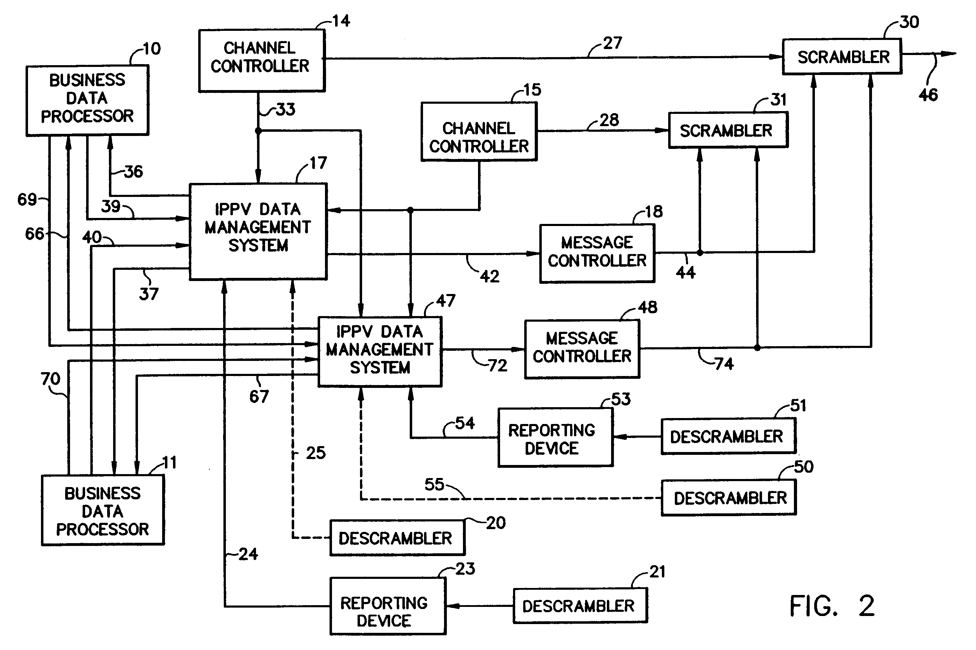

In an alternative preferred embodiment, as shown in Figure 2, a plurality of IPPV data management systems 17, 47 are coupled to the plurality of business data processors 10, 11 and the plurality of channel controllers 14, 15. This embodiment is used for controlling the distribution of IPPV programming to both the first set of descramblers 20, 21, and a second set of descramblers 50, 51. In this embodiment, all data pertaining to any given descrambler 20, 21, 50, 51 is processed by a single said IPPV data management system 17, 47. Accordingly, all data pertaining to the first set of descramblers 20, 21 is processed by one IPPV data management system 17; and all data pertaining to the second set of descramblers is processed by the other IPPV data management system 47. In this embodiment, the operation of the business data processors 10, 11, the channel controllers 14, 15, the IPPV data management system 17, the message controller 18 and the descramblers 20, 21 with respect to each other is the same as in the embodiment described with reference to Figure 1.

Each descrambler 50, 51 individually provides debit data indicating the cost of descrambled IPPV programs and view history data identifying descrambled IPPV programs. This descrambler-provided data is communicated to the IPPV data management system 47, either directly by a reporting device 53 connected to the descrambler 51 and line 54, or indirectly 55.

The channel controllers 14, 15 also provide such IPPV program and cost identification data to the IPPV data management system 47 via lines 33, 34.

The IPPV data management system 47 sorts the IPPV program identification and cost data provided by the channel controllers 14, 15 in accordance with which business data processors 10, 11 process data for those IPPV programs provided by the respective given IPPV programmers, and sorts view history data provided by the descramblers 50. 51 in accordance with which business data processors 10, 11 process data for the respective descramblers 50, 51 for the IPPV programmers that provide the IPPV programs identified in the view history data provided by the respective descramblers 50, 51. The IPPV data management system 47 sorts the view history data in accordance with a scheme wherein the view history data from a given descrambler 50, 51 for a given IPPV programmer is reported to only one business data processor 10, 11.

The IPPV data management system 47 forwards the sorted IPPV program identification and cost data and the sorted view history data to the respective business data processors via lines 66, 67.

Each business data processor 10, 11 processes view history data and credit data for individual descramblers 50, 51 and cost data for IPPV programs provided by given IPPV programmers and provides credit data and IPPV authorization data pertaining to individual descramblers 50, 51 via lines 69, 70 to the IPPV data management system 47.

Each of the business data processors 10, 11 maintains an account balance for each individual descrambler 50, 51 for which it authorizes descrambling of IPPV programming in the same manner as the account balances are maintained for the individual descramblers 20, 21.

The IPPV data management system 47 processes the credit data and IPPV authorization data provided by the business data processors 10, 11 to provide descrambler messages on line 72 that are unique to each descrambler and contain credit data and IPPV authorization data pertaining to the individual descrambler 50, 51. The IPPV data management system 47 maintains an accumulated credit balance for each individual descrambler 50, 51 in the same manner as the IPPV data management system 17 maintains accumulated credit balances for the individual descramblers 20, 21.

The IPPV data management system 47 authenticates the debit data provided by the descramblers 50, 51 in the same manner as the IPPV data management system 17 authenticates the debit data provided by the descramblers 20, 21.

The IPPV data management systems 17, 47 also generates polling messages to be sent to the descramblers 20, 21, 50, 51. The polling messages are provided to the scramblers 30, 31 by the respective message controllers 42, 72.

The business data processors 10, 11 perform the subscriber account management functions for the IPPV programmers. Unlike subscription programming, where a consumer may be authorized from several business systems simultaneously, an IPPV programmer should authorize a given consumer through only a single business data processor 10, 11. Otherwise the view history data for a given individual descrambler pertaining to that IPPV programmer would have to be uploaded to several business data processors 10, 11, which would cause multiple bills to be generated. An IPPV programmer may authorize descramblers through more than one business data processor 10, 11 (e.g. one for East coast subscribers and one for West coast subscribers). However, it is preferred that IPPV authorization for any given programmer is only available through one business data processor 10, 11. The complication introduced is one of correctly managing deauthorization by determining which business data processor 10, 11 receives the view history data if there is more than one business data processor authorizing a given IPPV programming descrambling service by the individual descrambler, and, for whatever reason, the subscriber is not known to be authorized for the service.

Although several business data processors 10, 11 can be associated with a given IPPV programmer, and it is only necessary to ensure that at most one business data processor 10, 11 offers a given IPPV programming service to any individual descrambler.

Any IPPV program can be offered for sale by at most one IPPV provider. If a program was offered by two providers simultaneously on the same channel, and a consumer subscribing to both of them bought that program, there is no way to tell which programmer should be paid. Thus, any purchasable program has only one IPPV tier associated with it. Normally, this tier is the only IPPV authorization tier used on that particular channel. This is not a necessary assumption. In systems where a business entity is providing IPPV programs from more than one IPPV programmer, there would be more than one IPPV authorization tier used on the channel. If the view history does not identify the authorization tier, it is necessary for the IPPV data management system 17, 47 to be given a log by the channel controllers 14, 15 showing which IPPV programmer supplied a given IPPV program to a given business data processor 10, 11, so that it can disburse view history data only to the business data processor(s) 10, 11 that are operated by business entities that are authorized to act for that IPPV programmer.

The IPPV data management system 17, 47 maintains a table showing which business data processors 10, 11 are associated with a given IPPV programmer, and this table is used to determine which business data processor 10, 11 receives a given view history record.

Each channel controller 14, 15 maintains a record of which IPPV authorization tier is related to the channel controller 14, 15 and a database of past IPPV programs.

The channel rekey messages generated on lines 27, 28 by the channel controllers 14, 15 set the IPPV tier which is authorized for the respective channel. On subscription programs, this announces to the VC2-prime descrambler which IPPV tier is supported on the channel. On IPPV programs, this defines the IPPV access rights. Access control via the IPPV tiers is enabled by use of the IPPV bit in the program rekey message.

Each channel controller 14, 15 generates file of past IPPV programs. These files are required by the business data processors 10, 11 for determination of debit, generation of itemized bills, and validation of incoming view history. Each such file should cover a certain period of time, ideally a month, but more realistically probably a week. Each file should identify the IPPV programmer and the file's position within the sequence of files generated by the channel controller so that the business data processor 10, 11 can be sure it has all the program history data in sequence.

Each program record in the file should contain the program ID, the program name, the program cost, and the program's IPPV authorization tier byte Program records should be in chronological order of transmission, with the oldest program first. A program covered by a free preview epoch and a purchase epoch is regarded as a single program and should be recorded only once. They can be written to the program history database at any time after the program starts.

Enabling and disabling of IPPV capabilities is done solely by the IPPV data management system 17, 47 through a new transaction. Authorization tier changes are to have immediate effect, and therefore always cause regeneration of any and all stored category rekey messages, and cause the category rekey message to be placed in the high priority queue. The new values are propagated until they are changed or until the unit is removed from the message lists.

Setting of IPPV credit is done solely by the IPPV data management system 17, 47 through a new transaction. Credit changes are to have immediate effect, and therefore cause regeneration of any and all stored category rekey messages and cause a category rekey message to be placed in the high priority queue. The new value is propagated until it is changed or until the unit is removed from the message lists.

The IPPV data management system 17, 47 maintains a descrambler unit database that contains data required to support descrambler unit features and capabilities within the scope of the overall IPPV data management system functionality. Creation of new unit records occur as a result of authorization transactions from either the business data processors or the console for the IPPV data management system 17, 47.

The IPPV data management system 17, 47 supports removal of a business data processor 10, 11 from the IPPV data management system 17, 47. For each descrambler, all services that previously were authorized by the business data processor 10,11 being removed are deauthorized and their view histories are collected. Once all descramblers have been deauthorized for IPPV programming services authorized by the removed business data processor 10, 11, and their view histories have been collected and stored on an upload tape, the IPPV data management system 17, 47 removes the record of the removed business data processor 10, 11 from its database.

The IPPV data management system 17, 47 also supports removal of a specified IPPV programming service for a given business data processor 10, 11. In this case, the descrambler units are deauthorized for only the removed service.

It is also possible to place a specific service for a business data processor 10, 11 in a "frozen" state. All transactions requesting authorization of a service in this state for a business data processor 10, 11 shall be rejected. However, deauthorization transactions are supported and view history data is collected.

Hence, for a business data processor, each IPPV programming service may have one of four states: not authorized, authorized, frozen, and terminated.

Termination of services is entered as a request to the IPPV data management system 17, 47. Upon receiving this request, the IPPV data management system 17, 47 initiates a background task to traverse the descrambler unit database, deauthorizing all units authorized for the service corresponding to the service symbol and collecting their view history. Once all descrambler units have been deauthorized for the terminated service and their view histories collected, the IPPV data management system 17, 47 removes the service from the list of current services. While the IPPV data management system 17, 47 is in the process of terminating a service, the service is designated in a "terminated" state, and the IPPV data management system 17, 47 prohibits any new authorization actions involving the service.

The IPPV data management system 17, 47 supports authorization and deauthorization of descrambler units for IPPV programming services. Authorization and deauthorization of services are specified in terms of the applicable service symbols. Authorization or deauthorization of services by the IPPV data management system 17, 47 is immediate. Alternatively it could be possible to request authorization or deauthorization of a service to take effect for some future date.

Authorization and deauthorization of a descrambler unit is possible from any business data processor 10, 11 or from the console of the IPPV data management system 17, 47. When by a business data processor 10, 11, the authorization/deauthorization request is checked by the IPPV data management system 17, 47 to allow only transactions for services that the requesting business data processor 10, 11 is authorized for. An authorization or deauthorization request from a business data processor 10, 11 may apply to specified individual IPPV programming services or to all of services authorized by the business data processor.

For descrambler unit authorization, the IPPV data management system 17, 47 builds a composite authorization mask by ORing the current authorization mask with the new authorization mask corresponding to specified service symbol. The resulting composite authorization mask is transmitted by the IPPV data management system 17, 47 to the respective message controller 18, 48.

For descrambler unit deauthorization, the IPPV data management system 17, 47 removes from the current authorization mask those tier bit(s) corresponding to the service(s) which are being deauthorized. The authorization mask resulting from a deauthorization action is transmitted by the IPPV data management system 17, 47 to the respective message controller 18, 48.

The IPPV data management system 17, 47 maintains at least the following basic authorization information about each descrambler: (1) a list of IPPV programming services the descrambler is authorized to descramble; and (b) the date on which the descrambler was last authorized for each service.

The IPPV data management system 17, 47 maintains at least the following basic credit information about each descrambler: (a) a show count limit set by each business data processor 10, 11; (b) the credit advance limit set by each business data processor 10, 11 and (c) the dates the showcount limit and the credit advance limit were last updated.

When descramblers are first authorized for an IPPV service, the IPPV data management system 17, 47 sends a polling message to the descramblers 21, 51 connected to reporting devices 23 53, requiring the reporting devices 23, 53 to report, thereby confirming that the reporting path is alive. The reporting device is required to report any change of view history or debit authenticator, but only when polled.

The IPPV data management system 17, 47 stores the view history data in a database organized by descrambler address, showing, for each view history record: (a) the channel identifier (IPPV provider ID); (b) the IPPV program ID; (c) the associated showcount; (d) whether the view history has been uploaded to a business data processor 10, 11; and (e) the date and time the view history record was received. The IPPV data management system 17, 47 checks the showcount data for consistency, and generates an exception report when an inconsistency is found.

If view history data is received from an unknown descrambler unit, a new unit record is created for it, and an exception report is generated. The view history is included in any view history upload tapes created for the business data processor responsible for the services identified in such view history.

The business data processors 10, 11 can access all view history data for IPPV programming services respectively authorized by such business data processors 10, 11.

## Claims

1. A distribution control system for controlling the distribution of scrambled impulse pay per view (IPPV) programing from a plurality of different IPPV programmers to a plurality of descramblers (20, 21, 50, 51) that individually may be authorized to descramble an individual IPPV program upon processing of a cost data signal for the program and a credit data signal for the descrambler and that individually provide view history data signals, the distribution control system comprising
a business data processing system (10, 11) adapted for processing view history data signals and credit data signals for individual descramblers (20, 21, 50, 51) and for providing credit data signals (39, 40) pertaining to individual descramblers; and
a plurality of channel control systems (14, 15) respectively related to a plurality of the given IPPV programmers, wherein the channel control systems are adapted for providing descrambler messages (27, 28) containing cost data signals for individual IPPV programs; and
an IPPV data management system (17, 47) adapted for processing the credit data signals (39, 40) provided by the business data processing system ((10, 11) to provide descrambler messages (42, 72) unique to each descrambler (20, 21, 50, 51) containing credit data signals pertaining to the individual descrambler,
the system being characterised by there being a plurality of said business data processing systems; (10, 11); and by
the channel control systems (14, 15) being adapted for providing identification signals for individual programs with the cost data signals (33, 34) provided for said programs;
each business data processing system (10, 11) being adapted for processing the credit data signals with view history data signals (24, 25, 54, 55) identifying descrambled IPPV programs provided by the descramblers (20, 21, 50, 51) and identification and cost data signals (33, 34) for individual IPPV programs provided by the channel control systems (14, 15) to provide the credit data signals (39, 40) that are provided to the IPPV data management system;
the IPPV data management system (17, 47) being adapted for sorting the IPPV program identification and cost data signals (33, 34) provided by the channel control systems (14, 15) in accordance with which business data processing systems (10, 11) process data signals for those IPPV programs provided by the respective given IPPV programmers, for sorting view history data signals (24, 25, 54, 55) identifying descrambled IPPV programs provided by the descramblers (20, 21, 50, 51) in accordance with which business data processing systems (10, 11) process data signals for the respective descramblers for the IPPV programmers that provide the IPPV programs identified in the view history data signals provided by the respective descramblers, and for forwarding the sorted IPPV program identification and cost data signals (36, 37) and the sorted view history data signals (36, 37) to the respective business data processing systems.

2. A distribution control system for controlling the distribution of scrambled impulse pay per view (IPPV) programming from a plurality of different IPPV programmers to a plurality of descramblers (20, 21, 50, 51) that individually may be authorized to descramble an individual IPPV program upon processing of a cost data signal for the program and a credit data signal for the descrambler and upon processing of an IPPV status data signal for the program and an authorization data signal for the descrambler, and that individually provide view history data signals, the distribution control system comprising
a business data processing system (10, 11) adapted for processing view history data signals and credit data signals for individual descramblers (20, 21, 50, 51) and for providing credit data signals (39, 40) and IPPV authorization data signals (39, 40) pertaining to individual descramblers; and
a plurality of channel control systems (14, 15) respectively related to a plurality of the given IPPV programmers, wherein the channel control systems are adapted for providing descrambler messages (27, 28) containing cost and IPPV status data signals for individual IPPV programs; and
an IPPV data management system (17, 47) adapted for processing the credit data signals (39, 40) and IPPV authorization data signals (39, 40) provided by the business data processing system (10, 11) to provide descrambler messages (42, 72) unique to each descrambler (20, 21, 50, 51) containing credit data signals and IPPV authorization data signals pertaining to the individual descrambler,
the system being characterised by there being a plurality of said business data processing systems (10, 11); and by
the channel control systems (14, 15) being adapted for providing identification signals for individual programs with the cost data signals (33, 34) provided for said programs;
each business data processing system (10, 11) being adapted for processing the credit data signals with view history data signals (24, 25, 54, 55) identifying descrambled IPPV programs provided by the descramblers (20, 21, 50, 51) and identification and cost data signals (33, 34) for individual IPPV programs provided by the channel control systems (14, 15) to provide the credit data signals (39, 40) that are provided to the IPPV data management system;
the IPPV data management system (17, 47) being adapted for sorting the IPPV program identification and cost data signals (33, 34) provided by the channel control systems (14, 15) in accordance with which business data processing systems (10, 11) process data signals for those IPPV programs provided by the respective given IPPV programmers, for sorting view history data signals (24, 25, 54, 55) identifying descrambled IPPV programs provided by the descramblers in accordance with which business data processing systems (10, 11) process data signals for the respective descramblers for the IPPV programmers that provide the IPPV programs identified in the view history data signals provided by the respective descramblers, and for forwarding the sorted IPPV program identification and cost data signals (36, 37) and the sorted view history data signals (36, 37) to the respective business data processing systems (10, 11).

3. A system according to Claim 1 or 2, characterised by the IPPV data management system (17, 47) being adapted for sorting view history data signals (24, 25, 54, 55) in accordance with a scheme wherein the view history data signals from a given descrambler (20, 21, 50, 51) for a given IPPV programmer is forwarded to only one business data processing system (10, 11).

4. A system according to Claim 1 or 2, characterised by further comprising a plurality of said IPPV data management systems (17, 47) coupled to said plurality of business data processing systems (10, 11) and said plurality of channel control systems, (14, 15)
wherein all data signals pertaining to any given descrambler (20, 21, 50, 51) are processed by a single said IPPV data management system (17, 47).

5. A system according to Claim 2, for controlling the distribution of IPPV programming to descramblers (20, 21, 50, 51) that individually may be authorized to descramble a given IPPV program upon processing of a cost data signal for the program and a credit data signal for the descrambler only when said IPPV status data signal identifies the given IPPV program as being authorized for purchase and the authorization data signal for the descrambler indicates that purchase of IPPV programs provided by the programmer providing said given IPPV program is authorized, the system being characterised by
each of the individual descrambler messages (42, 72) provided by the IPPV data management system (17, 47) containing a plurality of tier authorization bits, with the position of each bit identifying a tier of IPPV programs and each bit indicating whether purchase by the individual descrambler (20, 21, 50, 51) is authorized for the tier of IPPV programs identified by such bit; and by
the descrambler messages (27, 28) provided by a plurality of the channel control systems (14, 15) for a respective plurality of different IPPV programmers each containing an IPPV status bit in a respectively different position for processing with the tier authorization bits of the individual descrambler message, (42, 72), with each IPPV status bit indicating whether or not purchase of IPPV programming provided by the respective IPPV programmer is authorized.

6. A system according to Claim 2, for controlling the distribution of IPPV programming to descramblers (20, 21, 50, 51) that individually may be authorized to descramble a given IPPV program upon processing of a cost data signal for the program and a credit data signal for the descrambler only when said IPPV status data signal identifies the given IPPV program as being authorized for purchase and the authorization data signal for the descrambler indicates that purchase of IPPV programs provided by the programmer providing said given IPPV program is authorized, the system being characterised by
each of the individual descrambler messages (42, 72) provided by the IPPV data management system (17, 47) containing a plurality of tier authorization bits, with the position of each bit identifying a tier of IPPV programs and each bit indicating whether purchase by the individual descrambler (20, 21, 50, 51) is authorized for the tier of IPPV programs identified by such bit; and
the descrambler messages (27, 28) provided by a group of the channel control systems (14, 15) containing an IPPV status bit in a position for processing with a common one of the tier authorization bits of the individual descrambler message, (42, 72), with the IPPV status bit indicating whether or not purchase of an IPPV program is authorized.

## Patentansprüche

1. Verteilersteuersystem zum Steuern der Verteilung von Scrambleimpulsen zur Zahlung pro Teilnahme (IPPV), welche von einer Mehrzahl von unterschiedlichen IPPV-Programmiereinrichtungen für eine Mehrzahl von Descramblern (20, 21, 50, 51) derart programmiert werden, daß einzelne berechtigt werden können, ein einzelnes IPPV-Programm bei der Verarbeitung eines Kostendatensignals von dem Programm und einem Kreditdatensignal von dem Descrambler zu descrambeln, und welche individuell zeitliche Betrachtungsablaufdatensignale bereitstellen, wobei das Verteilersteuersystem folgendes aufweist:
ein Geschäftsdatenverarbeitungssystem (10, 11), welches derart ausgelegt ist, daß die Datensignale für den zeitlichen Ablauf der Teilnahme und die Kreditdatensignale für die einzelnen Descrambler (20, 21, 50, 51) verarbeitet werden, und daß Kreditdatensignale (39, 40) bereitgestellt werden, welche den einzelnen Descramblern zugeordnet sind, und
eine Mehrzahl von Kanalsteuersystemen (14, 15), welche jeweils der Mehrzahl von gegebenen IPPV-Programmiereinrichtungen zugeordnet sind, wobei die Kanalsteuersysteme derart ausgelegt sind, daß die Descrambler Informationen (27, 28) bereitstellen, welche Kostendatensignale für die einzelnen IPPV-Programme enthalten; und
ein IPPV-Datenverwaltungsystem (17, 47), welches derart ausgelegt ist, daß die Kreditdatensignale (39, 40) verarbeitet werden, welche von dem Geschäftsdatenverarbeitungssystem (10, 11) bereitgestellt werden, um Descramblerinformationen (42, 72) zu liefern, die in eindeutiger Weise den jeweiligen Descramblern (20, 21, 50, 51) zugeordnet sind, welche die Kreditdatensignale enthalten, die den einzelnen Decramblern zugeordnet sind,
das System sich dadurch auszeichnet, daß eine Mehrzahl von Geschäftsdatenverarbeitungssystemen (10, 11) vorgesehen sind; und
die Kanalsteuersysteme (14, 15) derart ausgelegt sind, daß sie Identifikationssignale für die einzelnen Programme mit den Kostendatensignalen (33, 34) für die Programme bereitstellen;
jedes Geschäftsdatenverarbeitungssystem (10, 11) derart ausgelegt ist, daß die Kreditdatensignale mit den Datensignalen (24, 25, 54, 55) für den zeitlichen Ablauf der einzelnen Teilnahme bzw. Betrachtungen, welche die descrambelten IPPV-Programme identifizieren, die von den Descramblern (20, 21, 50, 51) bereitgestellt werden, verarbeitet werden, und daß eine Identifikation vorgenommen wird, sowie Kostendatensignale (33, 34) für die einzelnen IPPV-Programme durch die Kanalsteuersysteme (14, 15) bereitgestellt werden, um Kreditdatensignale (39, 40) zu liefern, welche für das IPPV-Datenverwaltungssystem bestimmt sind;
das IPPV-Datenverwaltungssystem (17, 47) derart ausgelegt ist, daß die IPPV-Programmidentifikation und die Kostendatensignale (33, 34) sortiert werden, welche von den Kanalsteuersystemen (14, 15) nach Maßgabe der Geschäftsdatenverwaltungssysteme (10, 11) bereitgestellt werden, sowie Verarbeitungsdatensignale für diese Programme IPPV, welche durch die jeweils zugeordneten IPPV-Programmiereinrichtungen bereitgestellt werden, um die Datenzignale (24, 25, 54, 55) für den zeitlichen Ablauf der Teilnahme zu sortieren, die descrambelten IPPV-Programme zu identifizieren, welche von den Descramblern (20, 21, 50, 51) nach Maßgabe der Geschäftsdatenverarbeitungssysteme (10, 11) bereitgestellt werden und die Datensignale für die zugeordneten Descrambler für die IPPV-Programmiereinrichtungen verarbeitet werden, so daß die IPPV-Programme in den Datensignalen für den zeitlichen Ablauf der Teilnahme identifiziert werden, welche von den zugeordneten Descramblern bereitgestellt werden, und daß dieses System die sortierten IPPV-Programmidentifikations- und die Kostendatensignale (36, 37) sowie die sortierten Datensignale (36, 37) für den zeitlichen Ablauf der Teilnahme an die jeweiligen Geschäftsdatenverarbeitungssysteme weiterleitet.

2. Verteilersteuersystem zum Steuern der Verteilung von Scrambleimpulszahlbefehlen pro Teilnahme bei der (IPPV) Programmierung aus einer Mehrzahl von unterschiedlichen IPPV-Programmiereinrichtungen zu einer Mehrzahl von Descramblern (20, 21, 50, 51), welche individuell berechtigt werden können, um ein einzelnes IPPV-Programm bei der Verarbeitung eines Kostendatensignals für das Programm und eines Kreditdatensignals für den Descrambler und bei der Verarbeitung eines IPPV-Zustandsdatensignals für das Programm und eines Berechtigungsdatensignals für den Descrambler zu descrambeln und daß individuell Datensignale für den zeitlichen Ablauf der Teilnahme bereitgestellt werden, wobei das Verteilersteuersystem folgendes aufweist:
ein Geschäftsdatenverarbeitungssystem (10, 11), welches derart ausgelegt ist, daß die Datensignale für den zeitlichen Ablauf der Teilnahme und die Kreditdatensignale für die einzelnen Descrambler (20, 21, 50, 51) verarbeitet werden und Kreditdatensignale (39, 40) und IPPV-Berechtigungsdatensignale (39, 40) bereitgestellt werden, welche den einzelnen Descramblern zugeordnet sind; und
eine Mehrzahl von Kanalsteuersystemen (14, 15), welche jeweils der Mehrzahl von gegebenen IPPV-Programmiereinrichtungen zugeordnet sind, wobei die Kanalsteuersysteme derart ausgelegt sind, daß die Descrambler Informationen (27, 28) bereitstellen, welche Kostendatensignale und IPPV-Zustandssignale für die einzelnen IPPV-Programme enthalten; und
ein IPPV-Datenverwaltungssystem (17, 47), welches derart ausgelegt ist, daß die Kreditdatensignale (39, 40) und die IPPV-Berechtigungsdatensignale (39, 40) verarbeitet werden, welche von dem Geschäftsdatenverarbeitungssystem (10, 11) bereitgestellt werden, um die Descramblerinformationen (42, 72) individuell für den jeweiligen Descrambler (20, 21, 50, 51) zu gestalten, welche Kreditdatensignale und IPPV-Berechtigungsdatensignale enthalten, die den einzelnen Descramblern zugeordnet sind,
das System sich dadurch auszeichnet, daß eine Mehrzahl von Geschäftsdatenverarbeitungssystemen (10, 11) vorgesehen ist; und
daß Kanalsteuersysteme (14, 15) vorgesehen sind, welche derart ausgelegt sind, daß sie Identifikationssignale für die einzelnen Programme mit den Kostendatensignalen (33, 34) für die jeweiligen Programme bereitstellen;
jedes Geschäftsdatenverarbeitungssystem (10, 11) derart ausgelegt ist, daß die Kreditdatensignale mit den Datensignalen (24, 25, 54, 55) für den zeitlichen Ablauf der Teilnahme zur Identifizierung der descrambelten IPPV-Programme verarbeitet werden, die von den Descramblern (20, 21, 50, 51) bereitgestellt werden, und daß Identifikationssignale und Kostendatensignale (33, 34) für die einzelnen IPPV-Programme von den Kanalsteuersystemen (14, 15) bereitgestellt werden, um die Kreditdatensignale (39, 40) zu erhalten, welche für das IPPV-Datenverwaltungssystem bestimmt sind;
das IPPV-Datenverwaltungssystem (17, 47) derart ausgelegt ist, daß die IPPV-Programmidentifikation und die Kostendatensignale (33, 34) sortiert werden, die von den Kanalsteuersystemen (14, 15) nach Maßgabe der Geschäftsdatenverarbeitungssysteme (10, 11) bereitgestellt werden, wobei die Verarbeitungsdatensignale für diese IPPV-Programme bestimmt sind, welche den jeweiligen gegebenen IPPV-Programmiereinrichtungen zugeordnet sind, welches ferner die Datensignale (24, 25, 54, 55) für den zeitlichen Ablauf der Teilnahme sortiert, welche die descrambelten IPPV-Programme identifizieren, welche durch die Descrambler nach Maßgabe der Geschäftsdatenverarbeitungssysteme (10, 11) bereitgestellt werden, die Datensignale für die zugeordneten Descrambler für die IPPV-Programmiereinrichtungen verarbeitet werden, welche die IPPV-Programme identifizieren und die Datensignale für den zeitlichen Ablauf der Teilnahme bereitstellen, welche von den zugeordneten Descramblern geliefert werden und welches die sortierten IPPV-Programmidentifikations- und die Kostendatensignale (36, 37) und die sortierten Datensignale (36, 37) für den zeitlichen Ablauf der Teilnahme an die jeweils zugeordneten Geschäftsdatenverarbeitungssysteme (10, 11) weitergibt.

3. System nach Anspruch 1 oder 2, **dadurch gekennzeichnet,** daß das IPPV-Datenverwaltungssystem (17, 47) derart ausgelegt ist, daß die Datensignale (24, 25, 54, 55) für den zeitlichen Ablauf der Teilnahme nach Maßgabe eines Schemas sortiert werden, bei dem die Datensignale für den zeitlichen Ablauf der Teilnahme von einem gegebenen Descrambler (20, 21, 50, 51) für eine gegebene IPPV-Programmiereinrichtung nur zu einem Geschäftsdatenverarbeitungssystem (10, 11) abgegeben werden.

4. System nach Anspruch 1 oder 2, **dadurch gekennzeichnet,** daß ferner eine Mehrzahl von IPPV-Datenverwaltungssystemen (17, 47) vorgesehen ist, welche mit der Mehrzahl von Geschäftsdatenverarbeitungssystemen (10, 11) und der Mehrzahl von Kanalsteuersystemen (14, 15) verknüpft sind,
wobei alle Datensignale, welche einem gegebenen Descrambler (20, 21, 50, 51) zugeordnet sind, mit Hilfe eines einzigen IPPV-Datenverwaltungssystems (17, 47) verarbeitet werden.

5. System nach Anspruch 2 zur Steuerung der Verteilung von IPPV-Programmierungen zu Descramblern (20, 21, 50, 51), welche individuell berechtigt werden können, um ein gegebenes IPPV-Programm bei der Verarbeitung eines Kostendatensignals für das Programm und eines Kreditdatensignals für den Descrambler nur dann zu descrambeln, wenn das IPPV-Zustandsdatensignal identifiziert, daß das gegebenen IPPV-Programm für die Kostennutzung berechtigt ist, und das Berechtigungsdatensignal für den Descrambler angibt, daß die Kostennutzung der IPPV-Programme bereitgestellt von der Programmiereinrichtungen für das gegebene IPPV-Programm berechtigt ist, wobei das System sich dadurch auszeichnet, daß
jede einzelne Descramblerinformation (42, 72), die von dem IPPV-Datenverwaltungssystem (17, 47) bereitgestellt wird, welches eine Mehrzahl von Mehrfachberechtigungsbits enthält, wobei die Position jedes Bits eines der IPPV-Programme identifiziert, und jedes Bit angibt, ob eine Kostennutzung durch die einzelnen Descrambler (20, 21, 50, 51) für die Mehrfachnutzung der IPPV-Programme berechtigt ist, die durch dieses Bit identifiziert sind, und daß
die Descramblerinformationen (27, 28), welche von einer Mehrzahl von Kanalsteuersystemen (14, 15) für eine zugeordnete Mehrzahl von unterschiedlichen IPPV-Programmeinrichtungen bereitgestellt werden, jeweils ein IPPV-Zustandsbit in einer entsprechenden unterschiedlichen Position für die Verarbeitung mit den Mehrfachberechtigungsbits der einzelnen Descramblerinformationen (42, 72) enthalten ist, wobei jedes IPPV-Zustandsbit angibt, ob eine IPPV-Programmierung zur Kostennutzung zur Verfügung steht, welche durch die zugeordnete IPPV-Programmiereinrichtung berechtigt ist.

6. System nach Anspruch 2 zum Steuern der Verteilung von IPPV-Programmierungen zu Descramblern (20, 21, 50,5 1), welche individuell berechtigt werden können, um ein gegebenes IPPV-Programm bei der Verarbeitung eines Kostendatensignals für das Programm und eines Kreditdatensignals für den Descrambler nur dann zu descrambeln, wenn das IPPV-Zustandsdatensignal angibt, daß das gegebene IPPV-Programm für die Nutzung gegen Kosten berechtigt ist, und das Berechtigungsdatensignal für den Descrambler angibt, daß die kostenmäßige Nutzung der IPPV-Programme berechtigt ist, die von den Programmiereinrichtungen bereitgestellt werden, welche von dem gegebenen IPPV-Programm belegt ist, wobei sich das System dadurch auszeichnet, daß
jede der einzelnen Descramblerinformationen (42, 72), welche von dem IPPV-Datenverwaltungssystem (17, 47) bereitgestellt werden, und eine Mehrzahl von Mehrfachberechtigungsbits enthalten, wobei die Position jedes Bits eine Mehrfachberechtigung der IPPV-Programme identifiziert und jedes Bit angibt, ob die Nutzung der einzelnen Descrambler (20, 21, 50, 51) gegen Gebühr gestattet ist oder nicht, für die Mehrfachnutzung der IPPV-Programme berechtigt wird, welche durch dieses Bit identifiziert sind; und
die Descramblerinformationen (27, 28), durch eine Gruppe von Kanalsteuersystemen (14, 15) bereitgestellt werden, welche ein IPPV-Zustandsbit in einer Position zur Verarbeitung mit einem gemeinsamen Mehrfachberechtigungsbit der einzelnen Descramblerinformationen (42, 72) enthalten, wobei das IPPV-Zustandsbit angibt, ob eine gebührenpflichtige Nutzung eines IPPV-Programms berechtigt ist oder nicht.

## Revendications

1. Système de commande de distribution pour commander la distribution de la programmation à prépaiement d'impulsion cryptée à partir d'une pluralité de différents programmeurs à prépaiement par impulsion cryptée à une pluralité de décrypteurs (20, 21, 50, 51) qui peuvent être individuellement autorisés à décrypter un programme à prépaiement par impulsion cryptée individuel lors du traitement d'un signal de données de coût pour le programme et un signal de données de crédit pour le décrypteur et qui délivrent individuellement des signaux de données d'historique de visualisation, le système de commande de distribution comprenant
un système informatique de gestion (10, 11) prévu pour traiter des signaux de données d'historique de visualisation et des signaux de données de crédit pour les décrypteurs individuels (20, 21, 50, 51) et pour délivrer des signaux de données de crédit (39, 40) se rapportant aux décrypteurs individuels, et
une pluralité de systèmes de commande de canaux (14, 15), respectivement reliés à une pluralité des programmeurs de pré-paiement par impulsion cryptée donnés dans lesquels les systèmes de commande des canaux sont prévus pour délivrer des messages de décrypteur (27, 28) contenant des signaux de données de coût pour les programmes a prépaiement par impulsion cryptée individuels,
un système de gestion de données à prépaiement par impulsion cryptée (17, 47) prévu pour traiter des signaux de données de crédit (39, 40) délivrés par le système informatique de gestion (10, 11) afin de procurer des messages de décrypteur (42, 72) particuliers à chaque décrypteur (20, 21, 50, 51) contenant des signaux de données de crédit se rapportant au décrypteur individuel,
le système étant caractérisé en ce qu'il comporte une pluralité de systèmes informatiques de gestion (10, 11) et en ce que
des systèmes de commande de canaux (14, 15) sont prévus pour délivrer des signaux d'identification pour les programmes individuels avec les signaux de données de coût (33, 34) délivrés pour lesdits programmes,
chaque système informatique de gestion (10, 11) étant prévu pour traiter les signaux de données de crédit avec les signaux de données d'historique de visualisation (24, 25, 54, 55) identifiant les programmes à prépaiement par impulsion cryptée et décryptés délivrés par les décrypteurs (20, 21, 50, 51) et des signaux de données d'identification et de coût (33, 34) pour les programmes à prépaiement par impulsion cryptée individuels délivrés par les systèmes de commande de canaux (14, 15) pour délivrer les signaux de données de crédit (39, 40) qui sont délivrés au système de gestion des données à prépaiement par impulsion cryptée,
le système de gestion des données à prépaiement par impulsion cryptée (17, 47) étant prévu pour trier les signaux d'identification de programme à prépaiement par impulsion cryptée et de données de coût (33, 34) délivrés par les systèmes de commande de canaux (14, 15) en conformité avec lesquels les systèmes informatiques de gestion (10, 11) traitent les signaux de données pour ces programmes à prépaiement par impulsion cryptée délivrés par les programmeurs de prépaiement par impulsion cryptée donnés respectifs, pour trier les signaux de données d'historique de visualisation (24, 25, 54, 55) identifiant les programmes à prépaiement à impulsion cryptée décryptés délivrés par les décrypteurs (20, 21, 50, 51) en conformité avec lesquels les systèmes informatiques de gestion (10, 11) traitent des signaux de données pour les décrypteurs respectifs pour les programmeurs à prépaiement à impulsion cryptée qui délivrent les programmes à prépaiement à impulsion cryptée identifiés dans les signaux de données d'historique de visualisation délivrés par les décrypteurs respectifs et pour émettre les signaux d'identification de programme à prépaiement à impulsion cryptée triés et de données de coût (36, 37) et les signaux de données d'historique de visualisation triés (36, 37) vers les systèmes informatiques de gestion respectifs.

2. Système de commande de distribution pour commander la distribution de la programmation à prépaiement à impulsion cryptée (IPPV) à partir d'une pluralité de différents programmeurs à prépaiement à impulsion cryptée à une pluralité de décrypteurs (20, 21, 50, 51) qui peuvent être individuellement autorisés à décrypter un programme à prépaiement à impulsion cryptée individuel lors du traitement d'un signal de données de coût pour le programme et d'un signal de données de crédit pour le décrypteur et lors du traitement d'un signal de données d'état de prépaiement à impulsion cryptée pour le programme et un signal de données d'autorisation pour le décrypteur et qui délivrent individuellement des signaux de données d'historique de visualisation, le système de commande de distribution comprenant
un système informatique de gestion (10, 11) prévu pour traiter les signaux de données d'historique de visualisation et les signaux de données de crédit pour les décrypteurs individuels (20, 21, 50, 51) et pour délivrer des signaux de données de crédit (39, 40) et des signaux de données d'autorisation de prépaiement à impulsion cryptée (39, 40) se rapportant aux décrypteurs individuels, et
une pluralité de systèmes de commande de canaux (14, 15), respectivement reliés à une pluralité de programmeurs à prépaiement à impulsion cryptée donnés, dans lesquels les systèmes de commande de canaux sont prévus pour délivrer des messages de décrypteur (27, 28) contenant des signaux de données de coût et d'état de prépaiement à impulsion cryptée pour les programmes de prépaiement à impulsion cryptée individuels, et
un système de gestion de données à prépaiement à impulsion cryptée (17, 47) prévu pour traiter les signaux de données de crédit (39, 40) et les signaux de données d'autorisation de prépaiement à impulsion cryptée (39, 40) délivrés par le système informatique de gestion (10, 11) pour délivrer des messages de décrypteur (42, 72) particuliers à chaque décrypteur (20, 21, 50, 51) contenant des signaux de données de crédit et des signaux de données d'autorisation de prépaiement à impulsion cryptée se rapportant au décrypteur individuel,
le système étant caractérisé en ce qu'il comporte une pluralité desdits systèmes informatiques de gestion (10, 11) et en ce que
les systèmes de commande de canaux (14, 15) sont prévus pour délivrer des signaux d'identification pour les programmes individuels avec les signaux de données de coût (33, 34) procurés pour lesdits programmes,
chaque système informatique de gestion (10, 11) est prévu pour traiter les signaux de données de crédit avec les signaux de données d'historique de visualisation (24, 25, 54, 55) identifiant les programmes à prépaiement à impulsion cryptée décryptés délivrés par les décrypteurs (20, 21, 50, 51) et les signaux de données d'identification et de coût (33, 34) pour les programmes à prépaiement à impulsion cryptée individuels délivrés par les systèmes de commande de canaux (14, 15) pour délivrer les signaux de données de crédit (39, 40) qui sont délivrés au système de gestion de données de prépaiement à impulsion cryptée,
le système de gestion de données de prépaiement à impulsion cryptée (17, 47) est prévu pour trier les signaux d'identification de programme de prépaiement à impulsion cryptée et de données de coût (33, 34) délivrés par les systèmes de commande de canaux (14, 15) en conformité avec lesquels les systèmes informatiques de gestion (10, 11) traitent les signaux de données pour ces programmes à prépaiement à impulsion cryptée délivrés par les programmeurs de prépaiement à impulsion cryptée donnés respectifs, pour trier les signaux de données d'historique de visualisation (24, 25, 54, 55) identifiant les programmes à prépaiement à impulsion cryptée décryptés délivrés par les décrypteurs en conformité avec lesquels les systèmes informatiques de gestion (10, 11) traitent les signaux de données pour les décrypteurs respectifs pour les programmeurs à prépaiement à impulsion cryptée qui délivrent les programmes à prépaiement à impulsion cryptée identifiés dans les signaux de données d'historique de visualisation délivrés par les décrypteurs respectifs et pour envoyer les signaux de données d'identification de programme à prépaiement à impulsion cryptée triés et les signaux de données de coût triés (36, 37) et les signaux de données d'historique de visualisation triés (36, 37) aux systèmes informatiques de gestion respectifs (10, 11).

3. Système selon la revendication 1 ou 2, caractérisé par le système de gestion de données de prépaiement à impulsion cryptée (17, 47) qui est prévu pour trier les signaux de données d'historique de visualisation (24, 25, 54, 55) en conformité avec une configuration dans laquelle les signaux de données d'historique de visualisation provenant d'un décrypteur donné (20, 21, 50, 51) pour un programmeur de prépaiement à impulsion cryptée donné sont envoyés à un seul système informatique de gestion (10, 11).

4. Système selon la revendication 1 ou 2, caractérisé en ce qu'il comprend de plus une pluralité desdits systèmes de gestion de données de prépaiement à impulsion cryptée (17, 47) couplés à ladite pluralités des systèmes informatiques de gestion (10, 11) et à ladite pluralité des systèmes de commande de canaux (14, 15),
dans lequel tous les signaux de données se rapportant à tout crypteur donné quelconque (20, 21, 50, 51) sont traités par un seul desdits systèmes de gestion de données de prépaiement à impulsion cryptée (17, 47).

5. Système selon la revendication 2, pour commander la distribution de la programmation à prépaiement à impulsion cryptée aux décrypteurs (20, 21, 50, 51) qui peuvent être individuellement autorisés à décrypter un programme à prépaiement à impulsion cryptée donné lors du traitement d'un signal de données de coût pour le programme et un signal de données de crédit pour le décrypteur seulement lorsque le signal de données d'état de prépaiement à impulsion cryptée identifie le programme de prépaiement à impulsion cryptée donné comme étant autorisé pour l'achat et le signal de données d'autorisation pour le décrypteur indique que l'achat des programmes à prépaiement à impulsion cryptée délivrés par le programmeur délivrant ledit programme à prépaiement à impulsion cryptée donné est autorisé, le système étant caractérisé en ce que
chacun des messages de décrypteur individuel (42, 72) délivrés par le système de gestion de données de prépaiement à impulsion cryptée (17, 47) contient une pluralité de bits d'autorisation de tiers, avec la position de chaque bit identifiant un tiers des programmes à prépaiement à impulsion cryptée et chaque bit indiquant si l'achat par le décrypteur individuel (20, 21, 50, 51) est autorisé pour le tiers des programmes à prépaiement à impulsion cryptée identifiés par ce bit, et en ce que
les messages de décrypteur (27, 28) délivrés par une pluralité des systèmes de commande de canaux (14, 15) pour une pluralité respective des différents programmeurs de prépaiement à impulsion cryptée contiennent chacun un bit d'état de prépaiement à impulsion cryptée dans une position respectivement différente pour le traitement avec les bits d'autorisation de tiers du message de décrypteur individuel (42, 72), chaque bit d'état de prépaiement à impulsion cryptée indiquant si oui ou non l'achat du programme de prépaiement à impulsion cryptée délivré par le programmeur de prépaiement à impulsion cryptée respectif est autorise.

6. Système selon la revendication 2, pour commander la distribution de la programmation de prépaiement à impulsion cryptée à des décrypteurs (20, 21, 50, 51) qui peuvent être individuellement autorisés à décrypter un programme à prépaiement à impulsion cryptée donné lors du traitement d'un signal de données de coût pour le programme et un signal de données de crédit pour le décrypteur seulement lorsque ledit signal de données d'état de prépaiement à impulsion cryptée identifie le programme de prépaiement à impulsion cryptée donné comme étant autorisé pour l'achat et le signal de données d'autorisation pour le décrypteur indique que l'achat des programmes de prépaiement à impulsion cryptée délivrés par le programmeur délivrant ledit programme de prépaiement à impulsion cryptée donné est autorisé, le système étant caractérisé en ce que
chacun des messages de décrypteur individuel (42, 72) délivré par le système de gestion de données de prépaiement à impulsion cryptée (17, 47) contient une pluralité de bits d'autorisation de tiers, la position de chaque bit identifiant un tiers des programmes de prépaiement à impulsion cryptée et chaque bit indiquant si l'achat par le décrypteur individuel (20, 21, 50, 51) est autorisé pour le tiers des programmes de prépaiement à impulsion cryptée identifiés par ce bit, et
les messages de décrypteur (27, 28) délivrés par un groupe de systèmes de commande de canaux (14, 15) contiennent un bit d'état de prépaiement à impulsion cryptée dans une position pour le traitement avec un bit commun des bits d'autorisation de tiers du message de décrypteur individuel (42, 72), le bit d'état de prépaiement à impulsion cryptée indiquant si oui ou non l'achat d'un programme de prépaiement à impulsion cryptée est autorisé.
